# EUROPEAN PATENT APPLICATION

(11) **EP 4 836 097 A1**
(43) Date of publication of application: **04.11.2026**
(21) Application number: 25174103.9
(22) Date of filing: 02.05.2025
(51) Int. Cl.: H01M 10/658, H01M 50/209, H01M 50/249, H01M 50/505, H01M 50/507, H01M 50/522

(54) **BATTERY PACK BUSBAR PROTECTION**

(71) Applicant: Ford Global Technologies, LLC, Dearborn, MI 48126 (US)
(72) Inventor: COX, David, London, SE16 5XJ (GB); PETRIDIS, Themi, Bishop's Stortford, CM23 3NG (GB); ETHERIDGE, Paul, Crowborough, TN6 2EA (GB); XIAO, Zhiying, Billericay, CM11 1SB (GB)
(74) Representative: HG Law International LLP

(57) **Abstract**

The present disclosure provides a battery pack comprising a plurality of battery arrays each having a top cover and at least one busbar connected therebetween. Each busbar is connected between first and second battery arrays and are positioned such that each busbar substantially overlays at least part of each of top cover of the first and second battery arrays. A layer of silicate material is provided between each busbar and each top cover, each layer of silicate material is shaped so as to follow the shape of the respective busbar such that it lies between the respective busbar and the respective top cover, each layer of silicate material covers at least the surface of the respective busbar which faces the respective top cover, and the face of each respective busbar which faces away from the respective top cover is not covered by the silicate sheet.

## Description

### FIELD OF INVENTION

The present disclosure relates to battery packs for electric vehicles, and more particularly to a protective system for busbars in battery packs to minimize thermal propagation.

### BACKGROUND

Battery packs for electric vehicles typically contain multiple battery cells arranged in arrays or modules. These battery cells are electrically connected via conductive elements called busbars, which carry high currents between cells and modules. Busbars are usually made of highly conductive metals like copper or aluminium and are positioned above the battery arrays to make connections between terminals.

In conventional battery pack designs, the busbars are often provided above the battery arrays, e.g., when implemented in a vehicle. This positioning allows for efficient electrical connections but can present challenges in certain situations. During normal operation, battery cells generate heat which should be managed to maintain optimal performance and longevity. However, it is desirable to manage any temperature rises that may occur outside of normal operating conditions. In some approaches, busbar designs often rely on polymer-based insulation coatings to provide electrical isolation.

### SUMMARY

This Summary is provided to introduce a selection of concepts in a simplified form that are further described below in the Detailed Description.

In a first aspect, a battery pack is provided. The battery pack comprises a plurality of battery arrays, the battery arrays each having a top cover and at least one busbar connected therebetween, such that: each busbar is connected between a first battery array and a second battery array and are positioned such that each busbar substantially overlays at least part of each of top cover of the first and second battery arrays; a layer of silicate material is provided between each busbar and each top cover, wherein: each busbar is shaped to connect between a terminal of the first battery array and a terminal of the second battery array; each layer of silicate material is shaped so as to follow the shape of the respective busbar such that it lies between the respective busbar and the respective top cover; each layer of silicate material covers at least the surface of the respective busbar which faces the respective top cover; and the face of each respective busbar which faces away from the respective top cover is not covered by the silicate sheet.

This configuration provides thermal protection for the busbars by shielding them during cell venting events. The silicate material may act as a barrier.

The layer of silicate material may be formed from mica.

Using mica as the silicate material offers excellent thermal insulation and electrical resistance properties, further enhancing the protective capabilities of the battery pack design.

The layer of silicate material may substantially surround the respective busbar.

Surrounding the busbar with silicate material provides comprehensive protection from multiple directions, reducing vulnerability to thermal events and potential short circuits.

Each busbar may have sidewalls and each layer of silicate material may cover at least one sidewall of the respective busbar.

Covering at least one sidewall of the busbar with silicate material offers additional protection against lateral heat transfer and potential short circuits from debris accumulation.

Alternatively, each layer of silicate material may cover only one sidewall of the respective busbar.

This configuration provides targeted protection while potentially reducing material usage and weight.

In some embodiments, each layer of silicate material may cover both sidewalls of the respective busbar.

Covering both sidewalls offers maximum protection against thermal events and short circuits from multiple directions.

The layer of silicate material may have a substantially U-shaped cross-section.

A U-shaped cross-section allows the silicate material to effectively cradle the busbar, providing protection on multiple surfaces while maintaining a compact design.

Alternatively, each layer of silicate material may have a cross-section which includes a base section and two substantially parallel sidewalls which extend away from the base, substantially perpendicular to the base.

This configuration creates a protective channel for the busbar, offering comprehensive shielding while potentially simplifying manufacturing and assembly processes.

Each layer of silicate material may be affixed to the respective busbar.

Affixing the silicate material to the busbar ensures consistent positioning and protection, even during vehicle operation or in the event of mechanical shocks.

Alternatively, each layer of silicate material may be spaced away from the respective busbar so as to leave an air gap between the layer of silicate material and the respective busbar.

An air gap can provide additional thermal insulation and allow for thermal expansion of components, potentially reducing stress on the assembly.

Each busbar may be shaped to accommodate an additional portion on the respective top cover, and the respective layer of silicate material may be so shaped to follow the shape of the busbar and to lie between the additional portion on the respective top cover and the respective busbar.

This feature allows for integration with existing battery array designs while maintaining the protective benefits of the silicate material layer.

Each busbar may be coated in a fire-retardant material.

Adding a fire-retardant coating to the busbars may provide an additional layer of protection against thermal events.

The fire-retardant material may be a fire-retardant polymer.

Using a fire-retardant polymer coating offers effective protection while potentially being easier to apply than other fire-retardant materials.

Each layer of silicate material may be moulded.

Moulding the silicate material allows for precise shaping to match the busbar contours, ensuring optimal coverage and protection.

Alternatively, each layer of silicate material may be machined.

Machining the silicate material offers flexibility in creating complex shapes and allows for precise tolerances in the protective layer.

A vehicle may comprise the battery pack as described in any of the preceding aspects.

### BRIEF DESCRIPTION OF FIGURES

Non-limiting and non-exhaustive examples are described with reference to the following figures.
FIG. 1A illustrates a portion of a busbar which incorporates busbar protection as described herein;
FIG. 1B illustrates a portion of a battery pack which incorporates busbar protection as described herein;
FIG. 2 illustrates a further portion of a battery pack which incorporates busbar protection as described herein;
FIG. 3 illustrates a portion of busbar which includes busbar protection as described herein;
FIG. 4 illustrates another portion of busbar which includes busbar protection as described herein;
FIG. 5 illustrates a side view of a portion of busbar which includes busbar protection as described herein;
FIGS. 6A-6E illustrate combinations of busbars and busbar protection arrangements as described herein;
FIG. 7A illustrates another portion of a busbar which incorporates busbar protection as described herein;
FIG. 7B illustrates a portion of a battery pack which includes busbar protection as described herein; and
FIG. 8 illustrates a vehicle which incorporates a battery pack including the busbar protection as described herein.

Common reference numerals are used throughout the figures to indicate similar features.

### DETAILED DESCRIPTION

The present disclosure relates to battery packs for use in vehicles and other applications.

Battery packs typically comprise multiple battery arrays connected by conductive elements such as busbars. These busbars serve to electrically connect the battery arrays and allow current to flow between them. However, the positioning of busbars in close proximity to battery array components can present challenges in certain situations.

The present disclosure provides a battery pack with enhanced protection for busbars. This protection aims to mitigate potential issues that may arise during battery operation, particularly in high-temperature or fault conditions.

The protective elements described herein may be implemented in various configurations to suit different battery pack designs and requirements. These elements serve to insulate and shield the busbars from direct contact with battery array components.

A battery pack incorporating the disclosed busbar protection may be suitable for use in vehicles such as electric or hybrid electric vehicles.

The battery pack includes a plurality of battery arrays. Each battery array comprises multiple battery cells arranged in a specific configuration. The battery arrays are designed to provide the desired voltage and capacity for the battery pack.

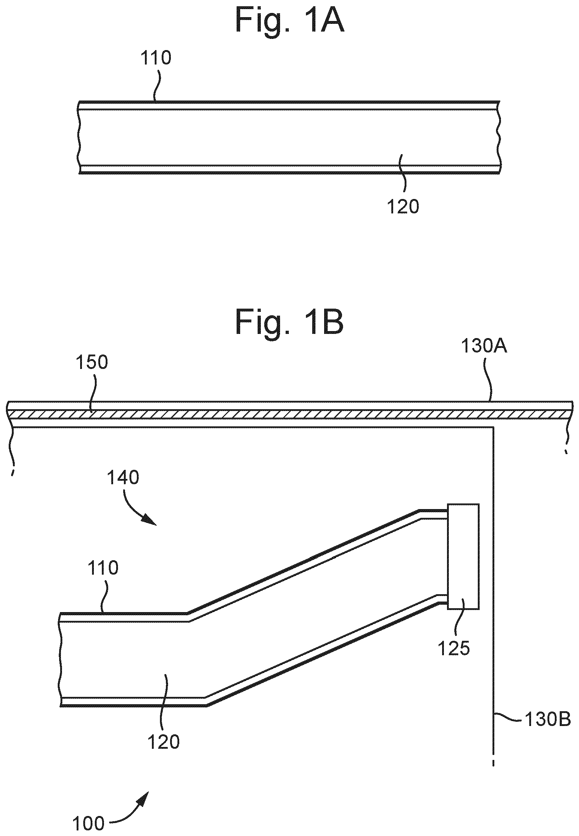

FIG. 1A illustrates a portion of a busbar 120 which is protected by a layer of silicate material 110. This is described in more detail in FIG. 1B.

The battery pack 100 comprises multiple battery arrays arranged within a portion of battery pack 100. FIG. 1B illustrates a section view showing key components of the battery pack 100. A portion of first battery array 130A and a portion of second battery array 130B are separated by a wall between arrays 150. Each battery array includes a battery array top cover 140 positioned over the respective array portion.

A busbar 120 extends between and electrically connects the battery arrays. The busbar 120 is positioned such that it substantially overlays at least part of the battery array top cover 140 of both the first battery array 130A and second battery array 130B. The busbar 120 includes a terminal 125 for electrical connection.

A layer of silicate material 110 is provided between the busbar 120 and the battery array top cover 140. The layer of silicate material 110 is shaped to follow the contours of the busbar 120, creating a protective barrier between the busbar 120 and the underlying components.

The busbar 120 is specifically shaped to connect between a terminal of the first battery array 130A and a terminal of the second battery array 130B, facilitating electrical connectivity between the arrays while maintaining appropriate spacing from other components. This arrangement allows for efficient electrical connections within the battery pack while incorporating protective measures.

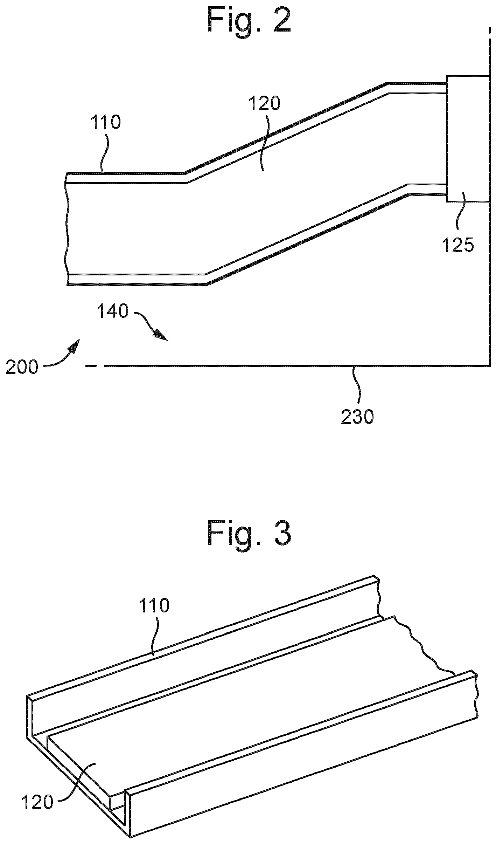

FIG. 2 illustrates a side sectional view of a portion of battery pack 200. The portion of battery pack 200 includes a portion of array 230 positioned beneath a battery array top cover 140. A busbar 120 extends across the battery array top cover 140 and connects to a terminal 125.

A layer of silicate material 110 is positioned between the busbar 120 and the battery array top cover 140. The layer of silicate material 110 is shaped to follow the contours of the busbar 120, creating a protective barrier between the busbar 120 and the underlying components. This configuration provides insulation and protection for the busbar 120 during cell venting events.

FIG. 3 shows a perspective view of the arrangement of the layer of silicate material 110 and the busbar 120. The layer of silicate material 110 forms a channel or trough-like configuration that closely follows the shape of the busbar 120. The busbar 120 is designed to be positioned within this channel formed by the layer of silicate material 110.

The layer of silicate material 110 covers the surface of the busbar 120 that faces the battery array top cover 140. However, the face of the busbar 120 that faces away from the battery array top cover 140 is not covered by the layer of silicate material 110. This arrangement allows for necessary electrical connections while providing protection to the busbar 120.

Each battery array includes a top cover. The top cover serves multiple functions, including protecting the internal components of the battery array, providing structural support, and facilitating connections between arrays. Top covers may be constructed from various materials such as plastic, metal, or composite materials, selected based on factors like durability, thermal properties, and manufacturability.

The battery arrays are arranged within the battery pack such that busbars can be connected between adjacent arrays. These busbars are positioned to overlay at least a portion of the top covers of the connected battery arrays. This arrangement allows for efficient electrical connections while maintaining a compact overall design.

In some examples, the top cover of a battery array may include an additional portion or feature to accommodate the shape or positioning of the busbar. This additional portion may be a raised section, recess, or other structural element designed to interface with the busbar. In such cases, a layer of silicate material may be placed between this additional portion of the top cover and the busbar. This silicate material may provide insulation and protection.

The configuration of the battery arrays, top covers, and busbars allows for efficient packaging of the battery pack while providing necessary electrical connections and protective measures. This design approach can be adapted to various battery pack sizes and layouts to suit different vehicle or application requirements.

The battery pack includes busbars that serve to electrically connect the battery arrays. These busbars are shaped to connect between terminals of different battery arrays, allowing for the flow of current between arrays. The specific shape of each busbar may vary depending on the layout and configuration of the battery arrays it connects.

Busbars may be constructed from highly conductive materials such as copper or aluminium to minimize electrical resistance. The cross-sectional area of a busbar may be designed to accommodate the expected current flow while managing heat generation.

In some examples, a busbar may have a flat, elongated shape that spans between the terminals of adjacent battery arrays. In other examples, a busbar may have a more complex three-dimensional shape to navigate around other components within the battery pack or to optimize the current path.

The positioning of busbars within the battery pack is carefully considered to ensure proper electrical connections while maintaining pack efficiency. Busbars may be positioned to overlay portions of the top covers of multiple battery arrays, allowing for compact packaging of the battery pack components.

The busbars may be coated with protective materials. In some examples, the busbars are coated in SABIC, a type of engineering thermoplastic. This coating can provide electrical insulation, corrosion resistance, and thermal management for the busbars.

The connection points between busbars and battery array terminals may incorporate features to ensure secure and reliable electrical contact. These features may include threaded connections, compression fittings, or welded joints, depending on the specific design requirements of the battery pack.

In some configurations, multiple busbars may be used in parallel to increase current-carrying capacity or to provide redundancy in the electrical connections between battery arrays. The arrangement of these parallel busbars may be optimized for factors such as current distribution, thermal management, and overall pack dimensions.

The battery pack includes a layer of silicate material positioned between each busbar and the top covers of the battery arrays. This silicate material serves as a protective layer, providing insulation and shielding for the busbars.

In some examples, the silicate material is composed of mica, a naturally occurring mineral known for its excellent electrical insulation properties and heat resistance. Mica is well-suited for this application due to its ability to withstand high temperatures and maintain its insulating properties under extreme conditions.

The layer of silicate material is shaped to follow the contours of the busbar it protects. This shaping ensures that the silicate material covers the surface of the busbar that faces the top cover of the battery array. By conforming to the busbar shape, the silicate material provides comprehensive protection along the length of the busbar.

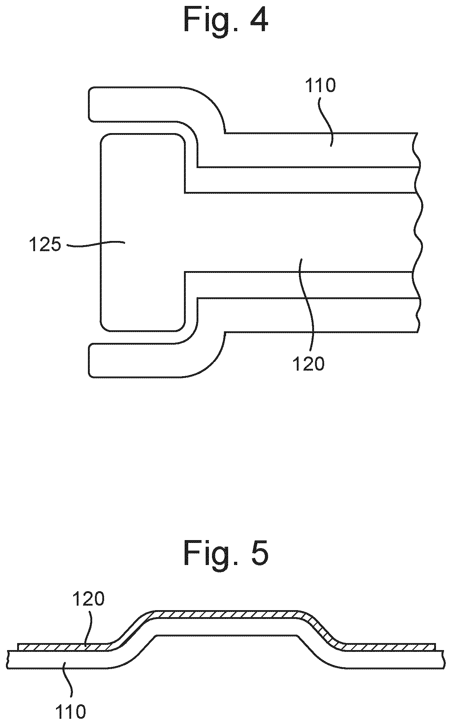

FIG. 4 and FIG. 5 provide orthogonal views of a busbar assembly, further illustrating the relationship between the layer of silicate material 110 and the busbar 120. FIG. 4 shows a top view of a busbar 120, a battery terminal 125, and a layer of silicate material 110, with the silicate material 110 positioned between the busbar 120 and a top cover of a battery array. In FIG. 4, the layer of silicate material 110 passes either side of the battery terminal 125 and but does not substantially surround the battery terminal 125. FIG. 5 presents a cross-sectional view of a busbar arrangement in which the busbar 120 is shaped so as to pass over a portion of a battery pack, i.e. it includes a raised portion. As can be seen in FIG. 5, the shape of the layer of silicate material 110 generally follows the shape of the busbar 120. These figures demonstrate how the layer of silicate material 110 extends along the length of the busbar 120, creating a protective barrier between the busbar 120 and other components.

The layer of silicate material 110 serves multiple protective functions. The layer of silicate material 110 shields the busbar 120 during thermal events. Additionally, the layer of silicate material 110 prevents short circuits between the busbar 120 and other components by providing an insulating barrier.

In some configurations, the layer of silicate material 110 may be shaped to form a 'bridge' over electrical distribution system (EDS) components. This allows for the integration of necessary electrical components while maintaining the protective function of the layer of silicate material 110.

Various configurations of the silicate material layer may be implemented to suit different busbar designs and protection requirements. In some examples, the silicate material substantially surrounds the busbar, providing protection on multiple sides. This configuration may take the form of a U-shaped cross-section, where the silicate material covers the bottom and both sides of the busbar.

Alternatively, the silicate material may be shaped to cover at least one sidewall of the busbar in addition to the surface facing the top cover. This L-shaped configuration can be particularly useful in situations where protection is needed on one side of the busbar, such as when the busbar is positioned at the edge of a battery array.

For applications where minimal material usage is desired, a flat configuration may be employed. In this case, the silicate material covers only the surface of the busbar that faces the top cover of the battery array. This flat design still provides crucial protection against potential short circuits or thermal events originating from the battery array below.

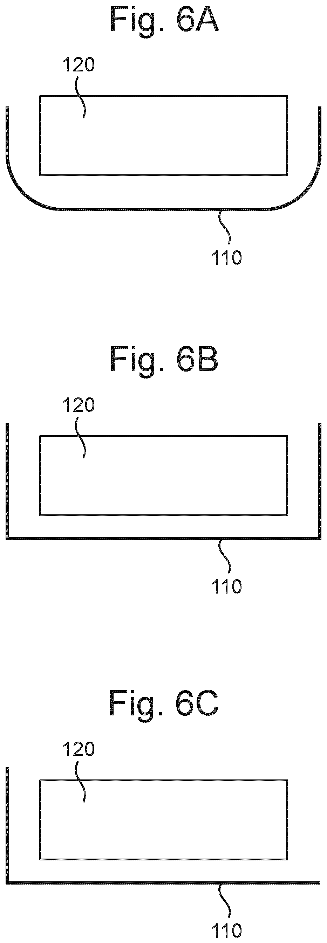

The layer of silicate material 110 and busbar 120 can be arranged in various configurations to provide optimal protection and insulation within the battery pack. FIGS. 6A-6C illustrate cross-sectional views of different arrangements of the layer of silicate material 110 relative to the busbar 120.

FIG. 6A shows a U-shaped configuration where the layer of silicate material 110 substantially surrounds the busbar 120. The layer of silicate material 110 includes a base portion that extends beneath the busbar 120 and upwardly extending side portions that cover the lateral sides of the busbar 120. In some examples, this may be a continuous curve such that the layer of silicate material does not have sharp edges. This arrangement may provide comprehensive protection by shielding the busbar 120 from multiple directions.

FIG. 6B depicts an alternative U-shaped configuration of the layer of silicate material 110 which takes a more square shape than that shown in FIG. 6A. In this arrangement, the layer of silicate material 110 includes a base portion positioned beneath the busbar 120 and upwardly extending portions that cover the sides of the busbar 120 similar to that shown inf FIG. 6A. This U-shaped configuration with flat sides and a flat base, similar to that shown in FIG. 6A may provide comprehensive protection by shielding the busbar 120 from multiple directions.

FIG. 6C illustrates an L-shaped configuration of the layer of silicate material 110 which is similar to the configuration shown in FIG. 6B with one side portion removed. This arrangement may provide protection to the underneath and one side of the busbar 120 by shielding the base and a side of the busbar 120. The side portion of FIG. 6C may be on either side of the busbar 120.

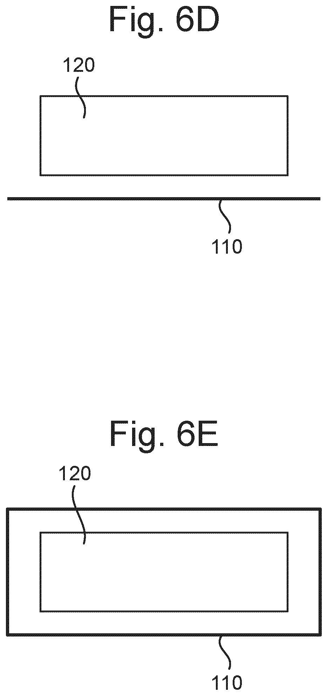

FIGS. 6D and 6E present side views of alternative configurations. FIG. 6D shows the layer of silicate material 110 in a flat "riverbed" shape relative to the busbar 120, which may protect the underside of the busbar 120. That which is shown in FIG. 6E is a layer of silicate material 110 which substantially surrounds the busbar 120 and may protect all sides of the busbar 120.

In some examples, the layer of silicate material 110 may be affixed to the busbar 120 to ensure consistent positioning and protection. Alternatively, the layer of silicate material 110 may be spaced away from the busbar 120, creating an air gap between the layer of silicate material 110 and the busbar 120. This air gap can provide additional insulation and allow for thermal expansion.

The busbar 120 and layer of silicate material 110 may be shaped to accommodate an additional portion on the battery array top cover 140. In such cases, the layer of silicate material 110 follows the shape of the busbar 120 and lies between the additional portion on the battery array top cover 140 and the busbar 120.

The layer of silicate material 110 can be formed from mica, which offers excellent electrical insulation and heat resistance properties. The layer of silicate material 110 may be manufactured through various processes. In some examples, the layer of silicate material 110 is moulded to achieve the desired shape and configuration. Alternatively, the layer of silicate material 110 may be machined to precise specifications, allowing for custom shapes and dimensions to fit specific busbar 120 designs.

These various configurations and manufacturing methods for the layer of silicate material 110 provide flexibility in designing protective arrangements for the busbar 120 within the battery pack.

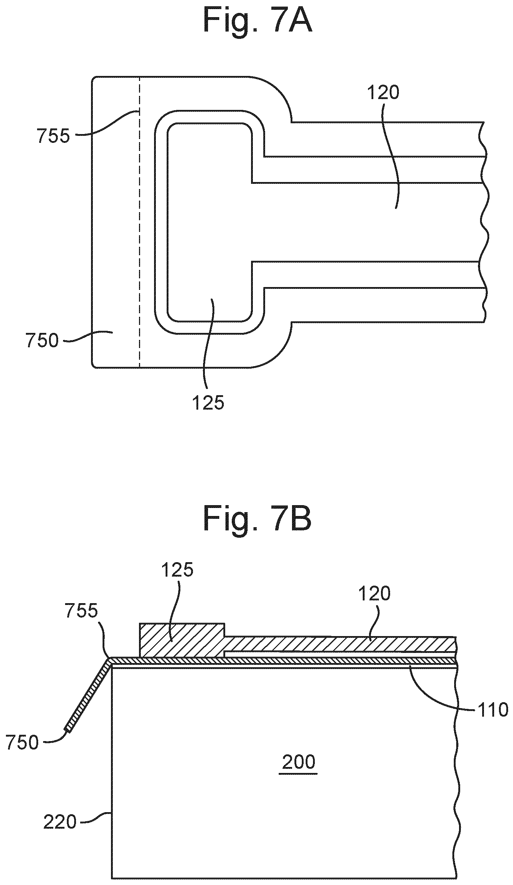

FIG. 7A illustrates an arrangement similar to that shown in FIG. 4. In FIG. 7, a busbar 120, a battery terminal 125, and a layer of silicate material 110, are shown with the silicate material 110 positioned between the busbar 120 and a top cover of a battery array. Different from that which is shown in FIG. 4, the layer of silicate material 110 passes either side of the battery terminal 125 and is shaped to generally surround the battery terminal 125. The layer of silicate material 110 includes a flap portion 750 which extends beyond the battery terminal 125. The layer of silicate material 110 shown in FIG. 7A includes a fold line 755 to enable the layer of silicate material 110 to be folded.

FIG. 7B illustrates a portion of a battery array 200 which includes the busbar 120, a battery terminal 125, and a layer of silicate material 110, are shown with the silicate material 110 positioned between the busbar 120 and the top cover of the battery array 200. As can be seen in FIG. 7B, the layer of silicate material 110 is folded about the fold line 755 such that the layer of silicate material may be brought into line with and to protect the end wall 220 of the battery array 220. The flap portion 750 may fold around the edge of the battery array 200 to extend down around the side of the array 200 and to cover any plastic over moulding of the battery terminal 125. This may aid in reducing gas venting out from the battery terminal 125. It may also provide protection to the battery terminal 125. Such protection may also extend to a neighbouring or adjacent array 200 within the battery pack.

The flap 750 may be flush to the battery terminal 125 or be positioned with enough clearance to the battery terminal 125 to allow a free flow of fluid thereout.

In some examples, silicate material may be used to encapsulate the battery terminal 125, e.g. to create a box around the battery terminal 125 and any over moulded plastic thereon.

The silicate material layer may be manufactured using various methods. In some examples, the silicate material is moulded to achieve the desired shape. Moulding allows for precise control over the dimensions and contours of the protective layer, ensuring a close fit with the busbar and optimal coverage.

Alternatively, the silicate material may be machined to create the protective layer. Machining can be advantageous for producing complex shapes or when small production runs are required. This method allows for fine adjustments to be made to the silicate material to accommodate variations in busbar design or battery pack layout.

The thickness of the silicate material layer may be selected based on factors such as the expected thermal conditions, electrical insulation requirements, and space constraints within the battery pack. The thickness may be uniform across the entire protective layer or varied in different regions to provide enhanced protection in critical areas.

In some configurations, the silicate material may be affixed directly to the busbar, creating a integrated protective unit. In other examples, the silicate material may be installed as a separate component, allowing for easier replacement or maintenance of the protective layer if needed.

In addition to the silicate material layer, the battery pack may incorporate other protective features. One such feature may be the application of fire-retardant coatings on the busbars.

A fire-retardant material may be applied to coat the busbars. This fire-retardant material provides an additional layer of protection against thermal events and helps to prevent the spread of fire within the battery pack.

In some examples, the fire-retardant material is a fire-retardant polymer. Fire-retardant polymers are materials that are designed to resist ignition and slow the spread of flames. These polymers may contain additives or have inherent properties that make them resistant to combustion.

The fire-retardant polymer coating may be applied to the busbars using various methods. In some examples, the coating may be applied through dip coating, where the busbars are immersed in a liquid polymer solution and then removed to allow the coating to cure. Alternatively, spray coating techniques may be employed to apply a uniform layer of the fire-retardant polymer to the busbar surfaces.

The thickness of the fire-retardant polymer coating may be selected based on factors such as the desired level of protection, thermal management requirements, and space constraints within the battery pack. The coating thickness may be uniform across the entire busbar or varied in different regions to provide enhanced protection in critical areas.

The fire-retardant polymer coating works in conjunction with the silicate material layer to create a comprehensive protection system for the busbars. While the silicate material provides insulation and shielding between the busbars and battery array components, the fire-retardant coating offers additional resistance to thermal events and helps prevent the busbars from becoming a source of fire spread.

The silicate material, which may be composed of mica, serves as a protective barrier between the busbars and the top covers of the battery arrays. This arrangement helps to insulate the busbars from direct contact with the battery array components.

In some examples, the silicate material is affixed directly to the busbar. This configuration creates an integrated protective unit that moves with the busbar, ensuring consistent coverage and protection. The affixed silicate material may help to dissipate heat from the busbar more effectively.

Alternatively, the silicate material may be spaced away from the busbar, leaving an air gap between the two components. This air gap can provide additional insulation and may allow for some thermal expansion of the busbar without compromising the protective layer. The spacing may also facilitate easier inspection or replacement of components if necessary.

The layer of silicate material and the busbar are arranged in various configurations to provide thermal and electrical insulation. In some examples, the layer of silicate material substantially surrounds the busbar, creating a protective barrier on multiple sides. This arrangement enhances the overall insulation and protection of the busbar from potential thermal events or debris.

In certain configurations, the layer of silicate material covers only one sidewall of the busbar. This asymmetric arrangement may be suitable for situations where exposure is primarily from one direction, while allowing for more efficient packaging in other areas.

The layer of silicate material may have a U-shaped cross-section in some implementations. This U-shaped configuration allows the layer of silicate material to cover the bottom surface of the busbar as well as both sidewalls, providing comprehensive protection while leaving the top surface of the busbar accessible for electrical connections.

In various examples, the layer of silicate material covers at least one sidewall of the busbar. This configuration ensures that the busbar is protected.

Some arrangements feature the layer of silicate material covering both sidewalls of the busbar. This dual-sidewall coverage may maximize lateral protection for the busbar.

In certain implementations, the layer of silicate material has a cross-section with a base and perpendicular sidewalls. This geometry creates a channel-like structure that cradles the busbar, providing a stable and protective enclosure. The base offers insulation from underneath, while the perpendicular sidewalls shield the lateral surfaces of the busbar.

These various configurations of the layer of silicate material relative to the busbar allow for adaptable protection strategies within the battery pack, accommodating different design requirements.

During a thermal event, such as a cell venting within a battery array, the silicate layer acts as a shield to protect the busbar. The silicate material's heat-resistant properties help to maintain its structural integrity and insulating capabilities even under high-temperature conditions.

The interaction between the silicate layer and the top cover of the battery array can help in managing potential thermal incidents. If a cell within the battery array experiences a thermal runaway event, the top cover may be subjected to high temperatures and pressures.

In some scenarios, the silicate layer may provide an additional buffer between the busbar and other components. This buffering effect may help to prevent direct contact between the busbar and other conductive elements.

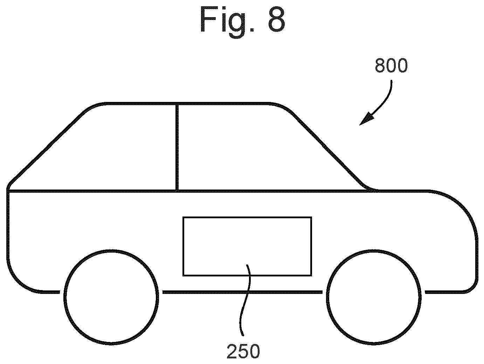

FIG. 8 illustrates the integration of a battery pack 250 into a vehicle body 800. The battery pack 250 is positioned within the lower portion of the vehicle body 800, demonstrating how the battery system can be incorporated into a vehicle design.

The placement of the battery pack 250 in the lower portion of the vehicle body 800 may provide several advantages for vehicle design and performance. Positioning the battery pack 250 low in the vehicle body 800 can contribute to a lower centre of gravity for the vehicle, which may enhance stability and handling characteristics.

The integration of the battery pack 250 into the vehicle body 800 may involve considerations for structural support and protection. The vehicle body 800 may be designed to accommodate the weight and dimensions of the battery pack 250, ensuring proper load distribution and structural integrity.

The busbar within the battery pack 250 may be coated in a fire-retardant material, and the fire-retardant material may be a fire-retardant polymer. This coating can provide an additional layer of protection for the electrical components within the battery pack 250.

The integration of the battery pack 250 into the vehicle body 800 may also involve considerations for thermal management. The vehicle body 800 may be designed to facilitate proper cooling and ventilation for the battery pack 250, which can be important for maintaining optimal battery performance and longevity.

In some examples, the vehicle body 800 may be designed to allow for serviceability of the battery pack 250. This may include access points or removable sections that facilitate maintenance or replacement of battery components without requiring extensive disassembly of the vehicle.

The integration of the battery pack 250 into the vehicle body 800 demonstrates how the protective measures described for the battery pack components, such as the layer of silicate material and busbar arrangements, can be applied in a practical automotive context.

The effectiveness of the mica protection during thermal propagation tests has been observed. In thermal propagation testing, battery packs incorporating the described protective measures have demonstrated enhanced resistance to the spread of thermal events between battery arrays.

The combination of these protective elements - the busbars, silicate layers, and top covers - creates a system designed to contain and mitigate the effects of potential thermal events within the battery pack.

Features of any of the examples or embodiments outlined above may be combined to create additional examples or embodiments without losing the intended effect. It should be understood that the description of an embodiment or example provided above is by way of example only, and various modifications could be made by one skilled in the art. Furthermore, one skilled in the art will recognise that numerous further modifications and combinations of various aspects are possible. Accordingly, the described aspects are intended to encompass all such alterations, modifications, and variations that fall within the scope of the appended claims.

## Claims

**1.** A battery pack comprising a plurality of battery arrays, the battery arrays each having a top cover and at least one busbar connected therebetween, such that:
each busbar is connected between a first battery array and a second battery array and are positioned such that each busbar substantially overlays at least part of each of top cover of the first and second battery arrays;
a layer of silicate material is provided between each busbar and each top cover, wherein:
each busbar is shaped to connect between a terminal of the first battery array and a terminal of the second battery array;
each layer of silicate material is shaped so as to follow the shape of the respective busbar such that it lies between the respective busbar and the respective top cover;
each layer of silicate material covers at least the surface of the respective busbar which faces the respective top cover; and
the face of each respective busbar which faces away from the respective top cover is not covered by the silicate sheet.

**2.** The battery pack of claim 1, wherein each layer of silicate sheet is formed from mica.

**3.** The battery pack of any preceding claim, wherein each layer of silicate material substantially surrounds the respective busbar.

**4.** The battery pack of claim 1 or claim 2, wherein each busbar has sidewalls and each layer of silicate material covers at least one sidewall of the respective busbar.

**5.** The battery pack of claim 1 or claim 2, wherein each busbar has sidewalls and each layer of silicate material covers only one sidewall of the respective busbar.

**6.** The battery pack of claim 4, wherein each layer of silicate material covers both sidewalls of the respective busbar.

**7.** The battery pack of claim 6, wherein each layer of silicate material has a substantially U-shaped cross-section.

**8.** The battery pack of claim 6, wherein each layer of silicate material has a cross-section which includes a base section and two substantially parallel sidewalls which extend away from the base, substantially perpendicular to the base.

**8.** The battery pack of any preceding claim, wherein each layer of silicate material is affixed to the respective busbar.

**9.** The battery pack of any one of claims 1-7, wherein each layer of silicate material is spaced away from the respective busbar so as to leave an air gap between the layer of silicate material and the respective busbar.

**10.** The battery pack of any preceding claim, wherein each busbar is shaped to accommodate an additional portion on the respective top cover, and the respective layer of silicate material is so shaped to follow the shape of the busbar and to lie between the additional portion on the respective top cover and the respective busbar.

**11.** The battery pack of any preceding claim, wherein each busbar is coated in a fire-retardant material.

**12.** The battery pack of claim 11, wherein the fire-retardant material is a fire-retardant polymer.

**13.** The battery pack of any preceding claim, wherein each layer of silicate material is moulded.

**14.** The battery pack of any one of claims 1-12, wherein each layer of silicate material is machined.

**15.** A vehicle comprising the battery pack of any one of claims 1-14.
